# EUROPÄISCHE PATENTANMELDUNG

(11) **EP 3 882 488 A1**
(43) Veröffentlichungstag der Anmeldung: **22.09.2021**
(21) Anmeldenummer: 21162772.4
(22) Anmeldetag: 16.03.2021
(51) Int. Cl.: F16H 49/00

(54) **SPANNUNGSWELLENGETRIEBEEINRICHTUNG MIT INTEGRIERTEM SENSOR**

(30) Priorität: 19.03.2020 DE 102020107674
(71) Anmelder: Harmonic Drive SE, 65555 Limburg/Lahn (DE)
(72) Erfinder: GERLACH, Oliver, 65558 Holzheim (DE)
(74) Vertreter: Weckenbrock, Matthias

(57) **Zusammenfassung**

Spannungswellengetriebeeinrichtung (10), umfassend ein Spannungswellengetriebe (40) mit einem eine erste Verzahnung (5) aufweisenden Zahnrad (4) (Circular Spline), einem eine zweite Verzahnung (2) aufweisenden flexiblen Zahnrad (1) (Flexspline) und einem Wellengenerator (7) (Wave-Generator) mit einem Wave-Generator-Lager (23) zum Auslenken des Flexsplines (1) in radialer Richtung, wobei die zweite Verzahnung (2) des Flexsplines (1) mit der ersten Verzahnung (5) des Circular Splines (4) in Eingriff bringbar ist, und mit einem gegenüber dem Flexspline (1) und/oder dem Circular Spline (4) räumlich feststehenden Bauteil (16),
wobei eine Maßverkörperung (30a-o) an einem der Zahnräder (1, 4) oder dem Wellengenerator (7) angeordnet ist und am räumlich feststehenden Bauteil (16) wenigstens ein Sensor (34) vorgesehen ist, welcher dazu ausgebildet ist, die Maßverkörperung (30a-o) kontaktlos zu erfassen.

## Beschreibung

Die Erfindung betrifft eine Spannungswellengetriebeeinrichtung, umfassend ein Spannungswellengetriebe mit einem eine erste Verzahnung aufweisenden Zahnrad (Circular Spline), einem eine zweite Verzahnung aufweisenden flexiblen Zahnrad (Flexspline) und einem Wellengenerator (Wave-Generator) mit einem Wave-Generator-Lager zum Auslenken des Flexsplines in radialer Richtung, wobei die zweite Verzahnung des Flexsplines mit der ersten Verzahnung des Circular Splines in Eingriff bringbar ist, und mit einem gegenüber dem Flexspline räumlich feststehenden Bauteil. Sie betrifft weiterhin ein Verfahren zur Drehpositionsbestimmung eines Spannungswellengetriebes.

Aus der EP 1 764 530 A1 ist ein Außenläufer-Wellengetriebe bekannt mit einem eine Außenverzahnung aufweisenden Circular Spline und mit einem eine Innenverzahnung aufweisenden Flexspline, welche in Eingriff miteinander stehen. Ein sogenannter Wellengenerator lenkt den Flexspline in radialer Richtung aus und bewirkt eine umlaufende elliptische Verformung des Flexsplines.

Aus der US 2,906,143 A ist ein Spannungswellengetriebe mit einem Flexspline, dessen Außenverzahnung mit der Innenverzahnung eines Circular Spline in Eingriff bringbar ist.

Die DE10 2018 130 970 A1 beschreibt ein Spannungswellengetriebe mit einem Übertragungselement bzw. Flexspline und einem Circular Spline. Das Übertragungselement weist einen Magnetisierungsbereich auf. Mit Hilfe eines Magnetfeldsensors kann das Drehmoment bestimmt werden.

Aus der JP H07-103 291 A ist ein Spannungswellengetriebe beschrieben. Mit Hilfe eines Films auf dem Flexspline und zwei Spulen kann das Drehmoment bestimmt werden.

In der WO 2007/ 082 954 A1 wird ein Spannungswellengetriebe mit einem magnetisierten Encoder beschrieben, der zur Erfassung des Drehwinkels des Rotors verwendet wird.

Bei einer Reihe von Anwendungen ist die Drehpositionsbestimmung des Getriebeausgangs notwendig. Aufgrund der elliptischen Verformung des Flexsplines sind starre kreisförmige Maßverkörperungen, wie sie allgemein bekannt sind, nicht geeignet.

Es ist daher Aufgabe der vorliegenden Erfindung, eine Spannungswellengetriebeeinrichtung anzugeben, welche eine Drehpositionserfassung am Getriebeausgang und/oder Getriebeeingang ermöglicht. Zudem soll ein entsprechendes Verfahren angegeben werden.

In Bezug auf die Spannungswellengetriebeeinrichtung wird diese Aufgabe gelöst durch eine Spannungswellengetriebeeinrichtung mit den Merkmalen des Anspruches 1.

Vorteilhafte Ausgestaltungen der Erfindung ergeben sich aus den Unteransprüchen sowie der nachfolgenden Beschreibung und den Figuren.

Erfindungsgemäß ist eine Maßverkörperung vorgesehen, welche an einem der Zahnräder oder dem Wellengenerator angeordnet ist, wobei am räumlich feststehenden Bauteil wenigstens ein Sensor vorgesehen ist, welcher dazu ausgebildet ist, die Maßverkörperung kontaktlos zu erfassen. Das bedeutet insbesondere, dass die Maßverkörperung eine Kodierung umfasst und die in der Maßverkörperung realisierte Kodierung von dem Sensor kontaktlos erfasst bzw. ausgelesen wird.

Die Erfindung geht von der Überlegung aus, dass bei einem Spannungswellengetriebe, bzw. einem sogenannten Harmonic Drive, eine Erfassung der rotatorischen Position des Flexsplines bzw. des Circular Splines wichtig für viele Anwendungen des Getriebes ist. Durch die spezielle Ausbildung eines derartigen Getriebes, insbesondere auch durch die, bei Drehungen des Wave-Generators, auftretenden Verformungen des Flexsplines sind herkömmliche Drehgeber bzw. Dreherfassungsvorrichtung hierfür nicht einsetzbar.

Eine Maßverkörperung bezeichnet hierbei insbesondere ein Messmittel, mit dessen Hilfe eine Maßeinheit verkörpert wird, welche in diesem Messmittel mehrfach in Form einer regelmäßigen Struktur als feste physikalische Größe kodiert ist. Beispielsweise kann eine Maßverkörperung optische oder magnetische Markierungen aufweisen, die in gleichen Abständen angeordnet sind, sodass zwei benachbarte Markierungen stets den gleichen Abstand voneinander aufweisen.

Wie nunmehr erkannt wurde, lässt sich die Erfassung der rotatorischen Position erreichen, indem der Flexspline oder Circular Spline bzw. der Wellengenerator mit einer Maßverkörperung versehen wird, welche kontaktlos bzw. berührungslos von einem Sensor erfasst wird.

Die Maßverkörperung ist, je nach Einbausituation der Spannungswellengetriebeeinrichtung, bevorzugt an dem abtriebsseitigen und/oder antriebsseitigen Bauteil des Getriebes, also des Circular Splines, des Flexsplines oder des Wellengenerators angebracht.

Bevorzugt ist der Sensor als IC ausgebildet, welcher in einem definierten Abstand, insbesondere 0,1 bis 0,5 mm, bevorzugt 0,3 mm, von der Maßverkörperung angeordnet ist. In einer bevorzugten Ausführungsform sind zwei Sensoren vorgehen, die über einen Umfangswinkel, insbesondere ca. 90 °, versetzt am entsprechenden Zahnrad angeordnet sind. Durch eine Differenzmessung können auf diese Weise Messungenauigkeiten minimiert werden bzw. herausgerechnet werden.

In einer bevorzugten Ausführungsform ist die Maßverkörperung umfangsseitig am Flexspline oder am Topfboden des Flexsplines angebracht. Eine derartige Anbringung ist platzsparend und erfordert keine zusätzlichen Bauteile wie beispielsweise einen Flansch. Ein weiterer Vorteil besteht darin, dass für den Anwender kein komplexer Montageaufwand entsteht, wie sie es bei Vielzahl von Messsystemen üblich ist.

Vorteilhafterweise ist der Flexspline topfförmig ausgebildet mit einem Topfboden und einer daran anschließenden Wandung, wobei die Maßverkörperung umfangsseitig benachbart zum Topfboden angebracht ist. Bevorzugt ist sie als ein an den Topfboden angespritzter Elastomerring ausgebildet. Besonders bevorzugt ist die Maßverkörperung an einem Übergangsbereich zwischen dem Topfmantel und dem Topfboden des Flexsplines angebracht, da an dieser Stelle eine geringe Torsion bzw. Verformung durch das zu übertragende Lastdrehmoment vorliegt.

In einer weiteren bevorzugten Ausbildung der Erfindung ist die Maßverkörperung am Circular Spline angebracht. Dadurch, dass sich der Circular Spline nicht verformt, ist der Luftspalt zwischen der am Circular Spline angebrachten Maßverkörperung und dem ortsfest angebrachten Sensor im Wesentlichen konstant, wodurch eine präzise kontaktlose Erfassung der Rotationslage des Circular Splines mit Hilfe des Sensors ermöglicht wird.

Die Maßverkörperung kann auf unterschiedliche Weise ausgebildet sein, um eine berührungslose bzw. kontaktlose Erfassung zu erlauben. Der Sensor ist je nach Kodierung entsprechend ausgebildet, um das berührungslose Messen zu ermöglichen.

Die Maßverkörperung ist vorteilhafterweise als, insbesondere magnetische, Master-Nonius-Maßverkörperung ausgebildet. Besonders bevorzugt wird eine Master-Nonius-Kodierung verwendet, welche beispielsweise 64 und 63 Markierungen aufweist, die über den Umfang am entsprechenden Zahnrad verteilt sind. Bevorzugt ist die Maßverkörperung als ein zu einem Ring geformtes Elastomermaterial ausgeführt, in dem magnetisierbare Partikel eingebracht sind, die zur Realisierung der gewünschten Kodierung magnetisiert werden. In diesem Fall ist innerhalb einer Umdrehung von 360° der absolute Drehwinkel mit Hilfe des Sensors direkt bestimmbar, und eine Steuer- und Regeleinheit zählt bevorzugt die Anzahl der vollen Umdrehungen.

Die Kodierung in einer anderen bevorzugten Ausführungsform ist inkrementell ausgeführt, sodass jeweils ein Weiterdrehen des Flexsplines um einen vorgegebenen Winkel aufgelöst bzw. detektiert wird.

Diese Kodierung hat vorzugsweise zwei um 90° phasenverschobene Maßverkörperungen und eine oder mehrere zusätzliche Referenzmarken. Aus dem zeitlichen Verlauf dieser Signale können Position, Drehzahl und Drehrichtung bestimmt werden. Durch Referenzieren nach dem Einschaltvorgang, lässt sich ebenso der absolute Winkel bestimmen.

Die Maßverkörperung weist in einer ersten bevorzugten Ausführungsform eine magnetische Kodierung auf. Der in Bezug auf den Flexspline ruhende bzw. raumfeste Sensor ist in diesem Falle dazu ausgebildet, ein veränderliches magnetisches Magnetfeld, welches bei der Drehung der Maßverkörperung relativ zum Sensor auftritt, aufzulösen und zu detektieren.

In anderen bevorzugten Ausführungsformen weist die Maßverkörperung eine induktive und/oder kapazitive und/oder optische Kodierung auf. Der Sensor ist in diesen Fällen jeweils entsprechend ausgebildet.

Bei einem induktiven Encoder bzw. einer induktiven Kodierung werden vorteilhafterweise Leiterplatten oder mechanische Strukturen als Maßverkörperung verwendet. Der korrespondierende Sensor umfasst eine Leiterplatte, welche umfangsseitig gegenüber der Maßverkörperung angeordnet ist. Durch Einspeisung hochfrequenter Signale in die Erregerwicklung wird in die Blöcke der rotierenden Maß-verkörperung ein Kreisstrom induziert. Dieser Kreisstrom wiederum induziert einen Strom in die Empfängerwindungen. Durch geometrische Ausgestaltung des Layouts werden auf diese Weise amplitudenmodulierte Signale erzeugt, welche dann demoduliert Sinus/Cosinus-Signale ergeben. Dadurch wird eine robuste und genaue Erfassung der Drehposition ermöglicht. Eine derartige Anordnung weist eine hohe Lebensdauer auf und ist unempfindlich gegen Fehlausrichtungen.

Bei einem kapazitiven Encoder bzw. einer kapazitiven Kodierung werden ebenfalls vorteilhafterweise mechanische Strukturen als Maßverkörperung verwendet, wobei sich hier relativ zueinander drehende Kreissegmente ähnlich einem Drehkondensator verhalten. Die Maßverkörperungen bestehen bevorzugt aus Leiterplatten und mechanischen Strukturen (z.B. Zahnrad). Eine derartige Anordnung ist preiswert und liefert bei hoher Lebensdauer robuste Messungen der Drehposition.

Bei einer optischen Kodierung ist er beispielsweise als Photoelement oder Kamera ausgebildet, während die Kodierung eine Mehrzahl von optisch erfassbaren Markierungen aufweist.

Die Erfassung der Maßverkörperung erfolgt bevorzugt kapazitiv oder optisch bzw. das Abtastprinzip der Maßverkörperung durch den Sensor zur Bestimmung der Drehposition ist bevorzugt kapazitiv oder optisch.

Die Maßverkörperung umfasst vorteilhafterweise einen elastischen Maßverkörperungskörper. Ein elastischer Maßverkörperungskörper eignet sich insbesondere zur Anbringung am verformbaren Flexspline. Der Maßverkörperungskörper ist bevorzugt als Elastomer ausgebildet bzw. aus Elastomermaterial gefertigt. Der Elastomer wird bevorzugt durch Kleben oder Vulkanisieren am Flexspline befestigt und bevorzugt anschließend magnetisiert.

In einer bevorzugten Ausführung sind der Maßverkörperungskörper und der Flexspline einstückig ausgebildet. Dies bedeutet insbesondere, dass die Kodierung in den Flexspline integriert ist, sodass nur ein Herstellungsschritt zur Herstellung von Flexspline und Maßverkörperung notwendig ist. Es ist kein zusätzlicher Montageschritt für die Maßverkörperung notwendig, und es ergibt sich eine Kosteneinsparung. Hierbei kann insbesondere eine mechanische Struktur, insbesondere Verzahnung, am abtriebsseitigen Kragen des Flexsplines angeordnet sein. Auch der Circular Spline bzw. der Dynamic Spline können einstückig mit dem Maßverkörperungskörper ausgebildet sein, wobei die Maßverkörperung vorteilhafterweise als Verzahnung am äußeren Umfang des Circular bzw. Dynamic Spline ausgebildet ist.

In einer bevorzugten Ausführungsform sind zwei Sensoren vorgesehen, welche in einer Ebene senkrecht zu einer Drehachse Getriebes in einem Winkel von 90° zueinander angeordnet sind. Diese Anordnung ist besonders vorteilhaft, wenn die Maßverkörperung am deformierbaren Flexspline angeordnet ist. Durch eine Mittelung der Signale können die Deformationen aufgrund der großen und kleinen Ellipsenachsen des Wellengenerators kompensiert werden.

In einer weiteren bevorzugten Ausführungsform sind zwei Sensoren vorgesehen, welche in einer Ebene senkrecht zu einer Drehachse des Getriebes in einem Winkel von 180° zueinander angeordnet sind. Mit einer derartigen Anordnung können Taumelbewegungen des Abtriebsbauteils des Getriebes, die insbesondere bei hoher Last auftreten können, kompensiert werden. Auch hier erfolgt bevorzugt eine Mittelung der Signale.

In noch einer weiteren bevorzugten Ausführungsform sind zwei Sensoren vorgesehen, welche in einer Ebene senkrecht zu einer Drehachse des Getriebes in einem Winkel von 60° zueinander angeordnet sind. Eine derartige Anordnung der Sensoren eignet sich zur Mittelung der Signale bei einer Ausbildung des Flexsplines mit einem triangelförmigen Querschnitt, d.h. durch jeweils eine Drehung des Flexsplines um 60° ist dieser, im Querschnitt gesehen, jeweils deckungsgleich mit seiner Lage vor der Drehung.

In einer vorteilhaften Ausführungsform weist die Spannungswellengetriebeeinrichtung einen Zusatzsensor für die Drehposition des Wave-Generators auf, wobei eine Überwachungsvorrichtung vorgesehen ist, welche eingangsseitig mit dem wenigstens einen Sensor und dem Zusatzsensor verbunden ist und die dazu konfiguriert ist, mittels vorgegebener Getriebeparameter eine indirekte Messung der Drehmomentbelastung und/oder eine Zustandsüberwachung des Spannungswellengetriebes durchzuführen. Der Wellengenerator wirkt dabei insbesondere als Antrieb und der Flexspline oder der Circular Spline (bzw. der Dynamic Spline bei einem Flachgetriebe) als Abtrieb. Die Spannungswellengetriebeeinrichtung ist in dieser Ausführung gewissermaßen eine Zustandsüberwachungsvorrichtung.

In einer bevorzugten Ausführung ist der Flexspline radial innerhalb des Circular Splines angeordnet, wobei die erste Verzahnung des Circular Splines eine Innenverzahnung und die zweite Verzahnung des Flexspline eine Außenverzahnung ist.

In Bezug auf das Verfahren wird die oben genannte Aufgabe gelöst durch ein Verfahren mit den Merkmalen des Anspruchs 15.

Erfindungsgemäß ist dabei vorgesehen, dass eine Maßverkörperung, welche an einem der Zahnräder oder dem Wellengenerator angeordnet ist, von einem in Bezug auf das Zahnrad raum-fest bzw. ortsfest angeordneten Sensor erfasst wird.

Die Vorteile der Erfindung liegen insbesondere darin, dass durch die beschriebene Einrichtung eine zuverlässige Bestimmung der rotatorischen Position des Getriebeausganges ermöglicht wird. Durch eine Messung am Getriebeausgang, insbesondere am Topfboden eines topfförmig ausgebildeten Flexsplines, werden Fehler aufgrund von Torsionssteifheit bei unterschiedlicher Last vermieden.

Durch die Messung der Drehposition am Flexspline werden eine Verbesserung der Geschwindigkeitskontrolle des Getriebes sowie eine Reduktion der rotatorischen Oszillationen ermöglicht.

Durch eine zusätzliche Drehpositionsbestimmung am Getriebeeingang am Wave-Generator wird eine frühe Detektion von Verschleiß, Spiel bzw. Totgang oder Veränderungen in der Getriebeübersetzung ermöglicht.

Bei der Verwendung einer, vom Getriebe bekannten, Steifheitskurve wird eine indirekte Bestimmung des anliegenden Drehmomentes ermöglicht.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen in schematischer Darstellung:
- Fig. 1: eine erste bevorzugte Ausführungsform einer erfindungsgemäßen Spannungswellengetriebeeinrichtung mit einer Maßverkörperung und einem Sensor,
- Fig. 2: eine zweite bevorzugte Ausführungsform einer erfindungsgemäßen Spannungswellengetriebeeinrichtung mit einer Maßverkörperung und einem Sensor,
- Fig. 3: eine dritte bevorzugte Ausführungsform einer erfindungsgemäßen Spannungswellengetriebeeinrichtung mit einer Maßverkörperung und einem Sensor, und
- Fig. 4: eine vierte bevorzugte Ausführungsform einer erfindungsgemäßen Spannungswellengetriebeeinrichtung mit einer Maßverkörperung und einem Sensor.

Gleiche Teile sind in allen Figuren mit denselben Bezugszeichen versehen.

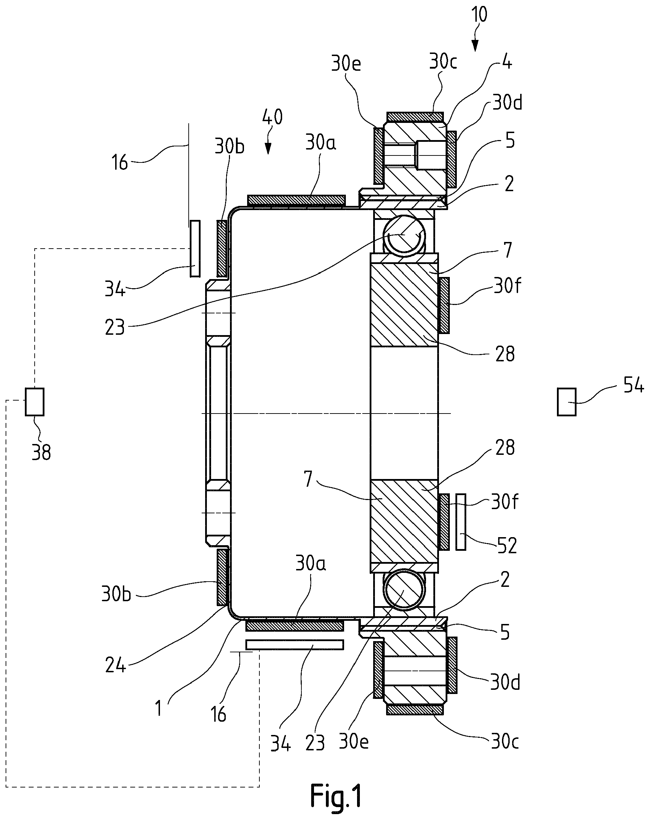

Figur 1 zeigt den grundsätzlichen Aufbau einer Spannungswellengetriebeeinrichtung 10 mit einem Spannungswellengetriebe 40 mit zwei formschlüssig, vorzugsweise über eine Umfangsverzahnung miteinander gekoppelten Getrieberädern zum Übertragen einer Drehbewegung. Das Spannungswellengetriebe 40 gemäß Fig. 1 ist dabei als Topfgetriebe mit einem topfförmigen Flexspline 1 ausgebildet. Mit Bezugszeichen 1 ist dabei der Flexspline des Spannungswellengetriebes 40 bezeichnet und mit Bezugszeichen 4 ein koaxial dazu angeordneter Circular Spline, bei dem es sich um einen zylindrisch ausgebildeten Getriebering handelt.

Unter dem Flexspline 1 wird vorliegend das elastisch verformbare Getrieberad des Spannungswellengetriebes 40 verstanden, welches eine Außenverzahnung 2 aufweist, welche mit einer Innenverzahnung 5 des Circular Splines 4 in Eingriff bringbar ist.

Der Flexspline 1 ist dabei in eine etwa elliptische Form auslenkbar, wobei die elliptische Auslenkung als eine über den Umfang des Flexsplines 1 umlaufende Verformung erzeugt werden kann. Der Flexspline 1 befindet sich mit seiner Außenverzahnung 2 lediglich im Bereich der großen Ellipsenachse in Eingriff mit der Innenverzahnung 5 des Circular Splines 4. Durch die Verlagerung der elliptischen Verformung über den Umfang des Flexsplines 1 kommt es zu einer rotatorischen Relativbewegung zwischen Flexspline 1 und Circular Spline 4.

Die elliptische Verformung des Flexsplines 1 erfolgt über einen Wellengenerator bzw. Wave-Generator 7, der bei dem hier gewählten Ausführungsbeispiel durch einen Stahlring mit einer zentrischen Nabe, dem sogenannten Plug 28, welcher an der Außenseite eine ellipsenähnliche Kontur besitzt, und aufgezogenem elliptisch verformbaren Wave-Generator-Lager 23 gebildet wird. Das Wave-Generator-Lager 23 des Wave-Generators 7 ist an der Innenmantelfläche des Flexsplines 1 positioniert.

Der Wave-Generator 7 als angetriebenes Bauteil verformt über das Wave-Generator-Lager 23 den Flexspline 1, der sich in den gegenüberliegenden Bereichen der großen EIlipsenachse mit dem innenverzahnten Circular Spline 4 im Eingriff befindet. Mit Drehen des Wave-Generators 7 verlagert sich die große Ellipsenachse und damit der Zahneingriffsbereich.

Der Flexspline 1 besitzt in dem hier gewählten Ausführungsbeispiel zwei Zähne weniger als der Circular Spline 4, so dass sich nach einer halben Umdrehung des Wave-Generators 7 eine Relativbewegung zwischen Flexspline 1 und Circular Spline 4 um einen Zahn und nach einer ganzen Umdrehung um zwei Zähne vollzieht.

Die Spannungswellengetriebeeinrichtung 10 ist dazu ausgebildet, am Getriebeausgang die Drehung bzw. Rotation der entsprechenden Komponente zu messen. In der Figur 1 sind dazu verschiedene Möglichkeiten einer Befestigung einer Maßverkörperung 30a-f gezeigt, die jeweils mit der Zahl und einem Buchstaben gekennzeichnet sind. Im Rahmen der Anmeldung bezeichnet das Bezugszeichen 30 generell eine Maßverkörperung, die speziell eine dargestellte Maßverkörperung 30a-o repräsentieren kann.

In einer ersten Variante weist der Flexspline 1 eine Maßverkörperung 30a auf, welche am Flexspline 1 umfangsseitig angeordnet ist. Die Maßverkörperung 30a ist im vorliegenden dargestellten bevorzugten Ausführungsbeispiel als magnetische Master-Nonius-Maßverkörperung ausgebildet. An einem ortsfest gegenüber dem Getriebe 40, insbesondere dem Flexspline 1, angeordneten Bauteil 16, welches beispielsweise eine Wandung eines Gehäuses der Einrichtung 10 ist, ist ein Sensor 34 angebracht, welcher dazu ausgebildet ist, eine Drehung des Flexplines 1 zu erfassen. Eine elektronische Auswerteeinheit 38 ist signaleingangsseitig mit dem Sensor 34 verbunden und dazu ausgebildet, mit Hilfe der vom Sensor 34 übermittelten Signale die Drehposition des Flexsplines 1 zu erfassen. Der Sensor 34 ist bevorzugt als magneto-resistiver Sensor ausgebildet.

Es kann ein weiterer Sensor 34 vorgesehen sein, welcher in einem Umdrehungswinkel von 90° zu dem ersten Sensor 34 angeordnet ist. Dies bedeutet, dass die beiden Sensoren 34 relativ zueinander auf einem Ziffernblatt einer Uhr beispielsweise die Positionen 12 Uhr und 3 Uhr einnehmen würden. Durch die Verwendung von zwei Sensoren 34 können auf diese Weise die Verformungen des Flexsplines 1 bei dessen Rotation kompensiert werden. Der elliptisch verformte Flexspline weist in jedem Moment seiner Rotation an seinem Umfang eine große Ellipsenachse und senkrecht dazu (d.h. im Winkel von 90°) eine kleine Ellipsenachse auf. Indem die beiden Sensorsignale addiert und gemittelt werden, kann die Auswirkung dieser Deformation herausgemittelt werden.

In einer zweiten Variante ist die Maßverkörperung 30b an einem Topfboden 24 des topfförmig ausgebildeten Flexsplines 1 angeordnet. Auch hier ist wieder ein Sensor 34 eingezeichnet.

In einer dritten Variante ist die Maßverkörperung 30c umfangsseitig am Circular Spline 4 angeordnet. In einer vierten und fünften Variante ist die Maßverkörperung 30d (30e) auf einer Vorderseite (Hinterseite) des Circular Splines 4 angeordnet. Der Vorteil hierbei ist, dass sich der Circular Spline nicht verformt, sodass der Luftspalt zwischen einem Sensor 34 und der Maßverkörperung 30c-30e während der Rotation des Circular Splines konstant bleibt.

In einer sechsten Variante ist die Maßverkörperung 30f vorderseitig am Wellengenerator 7 angebracht.

Durch diese Drehpositionsbestimmung am Getriebeeingang wird eine frühe Detektion von Verschleiß, Spiel bzw. Totgang oder Veränderungen im Übertragungsverhalten ermöglicht. Vorteil hierbei ist die Möglichkeit einer direkten Zustandsüberwachung von relevanten Getriebeeigenschaften in der Applikation. Einstellungen des Strom-, Drehzahl- und Positionsreglers können dem aktuellen mechanischen Zustand des Wellgetriebes angepasst werden und ermöglichen so eine Verlängerung der Einsatzdauer bei gleichbleibender Präzision.

Bei der Verwendung einer, vom Getriebe bekannten, Steifheitskurve wird eine indirekte Möglichkeit der Bestimmung des anliegenden Drehmomentes ermöglicht. Dieses kann in Anwendungen mit hoher Anforderung an die Sicherheit verwendet werden. Ein Beispiel dafür sind Kraft bzw. Drehmomentbegrenzung bei kollaborieren Robotern.

Für die am Getriebe verwendeten Antriebsmaschinen ist kein Positions-Feedback-System (Resolver, Encoder, Hall-Sensoren, ...) erforderlich. Kommutierung, Drehzahl- und Positionsregelung, können mit der am Wellengenerator angebrachten Maßverkörperung realisiert werden. Dieses bietet Kosteneinsparung und Kompaktheit gegenüber herkömmlicher Lösungen.

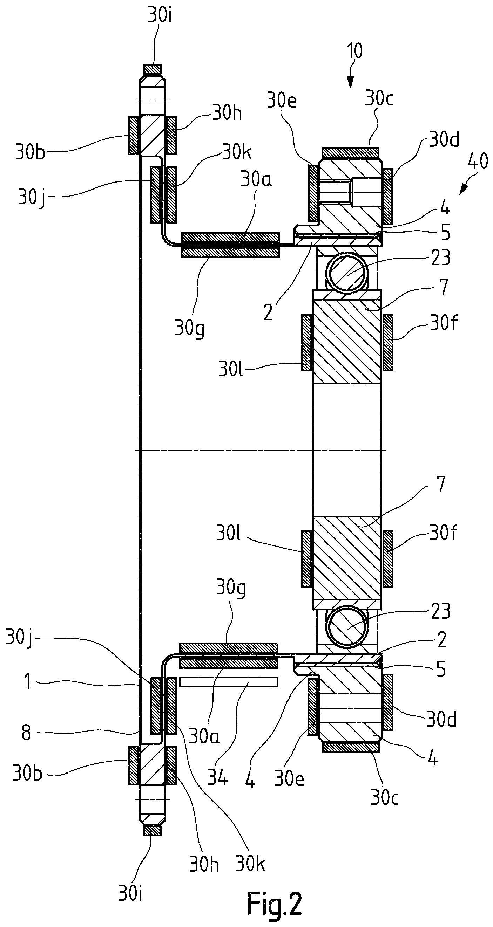

In Fig. 2 ist eine Spannungswellengetriebeeinrichtung 10 in einer zweiten bevorzugten Ausführungsform dargestellt. Das Spannungswellengetriebe 40 ist hierbei als Hutgetriebe ausgebildet, bei dem der Flexspline 1 einen kragenförmigen Bereich 8 aufweist. Auch bei dieser Einrichtung sind Maßverkörperungen 30a-f an den Getriebebauteilen 1,4, 7 anbringbar. Durch die Bauweise des Getriebes 40 sind darüber hinaus noch zusätzliche Positionen möglich. So kann eine Maßverkörperung 30I auch innenseitig im Wellengenerator 7 oder eine Maßverkörperung 30g an einem innenseitigen Umfang des Flexsplines angebracht werden. Die Maßverkörperung kann radial bzw. an einem Außenumfang des kragenförmigen Bereiches 8 angebracht werden (30i) oder an einer Vorderseite (30k, 30h) oder Rückseite (30b) dieses Bereiches bzw. auch innenseitig (30j). Der Sensor 34 wird jeweils derart an dem raumfesten Bauteil 16 angebracht, dass eine kontaktlose Erfassung der Maßverkörperung bzw. ihrer Kodierung zuverlässig möglich ist.

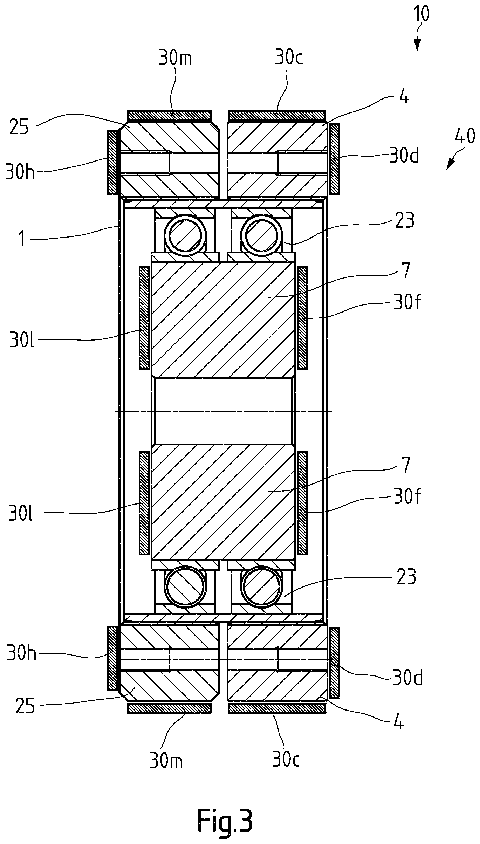

Die Fig. 3 zeigt eine Spannungswellengetriebeeinrichtung 10 mit einem Spannungswellengetriebe 40, welches als Flachgetriebe ausgebildet ist. Das Getriebe 40 umfasst als weiteres Bauteil einen Dynamic Spline 25, welcher je nach Einbauvariante auch das abtriebsseitige Bauteil sein kann. Der Dynamic Spline 25 weist die gleiche Zähnezahl wie der Flexspline 1 auf und dreht daher synchron zum Flexspline 1. Der Flexspline 1 wird durch den Wellengerator 7 gleichzeitig in den feststehenden Circular Spline 4 und den Dynamic Spline 25 gedrückt. Neben den bisher dargestellten Möglichkeiten der Anbringung der Maßverkörperung an Flexspline 1, Circular Spline 4 oder Wellengenerator 7 kann die Maßverkörperung auch umfangsseitig (30m) oder stirnförmig (30n) am Dynamic Spline 25 angebracht werden.

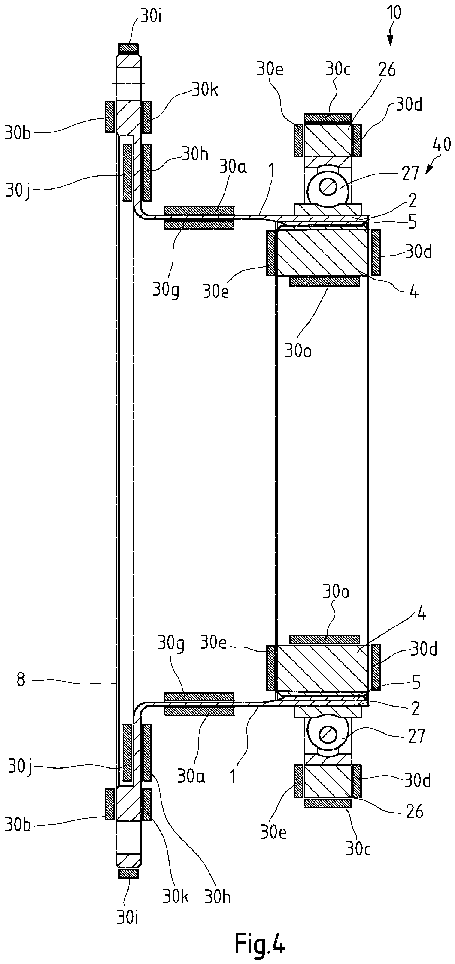

Die Fig. 4 schließlich zeigt eine Spannungswellengetriebeeinrichtung 10 mit einem Spannungswellengetriebe 40, welches als Außenläufergetriebe ausgebildet ist. Der Circular Spline 4 weist dabei eine Außenverzahnung 5 auf, die in Eingriff mit einer Innenverzahnung 2 des Flexsplines 1 gebracht werden kann. Ein Rotor 26 ist radial außerhalb des Circular Splines 4 auf einem Lager 27 angeordnet und fungiert als Wellengenerator. Der Flexspline 1 weist einen kragenförmigen Bereich 8 auf, sodass hier wie bei dem in der Fig. 2 gezeigten Getriebe 40 die gleichen Anbringungsmöglichkeiten für die Maßverkörperung am kragenförmigen Bereich 8 zur Verfügung stehen. Weiterhin kann eine Maßverkörperung 30o auch an einem innenseitigen Umfang des Circular Splines 4 angebracht werden.

In einer bevorzugten Ausführungsform ist bei den Spannungswelleneinrichtungen 10 der Fig. 1-4 eine Maßverkörperung 30 am Flexspline 1, Circular Spline 4 bzw. Dynamic Spline 25 vorgesehen, welche mit Hilfe eines Sensors 34 erfasst wird und eine weitere Maßverkörperung 30 am Wellengenerator 7 bzw. Rotor 26 angebracht, welche mit Hilfe eines Zusatzsensors 52 erfasst wird (dieser ist beispielhaft in Fig. 1 gegenüber der Maßverkörperung 30f eingezeichnet).

Die Spannungswellengetriebeeinrichtung 10 weist weiterhin eine schematisch eingezeichnete Überwachungsvorrichtung 54 auf, welche eingangsseitig mit dem Sensor 34 und dem Zusatzsensor 52 verbunden ist und die dazu konfiguriert ist, mittels vorgegebener Getriebeparameter eine indirekte Messung der Drehmomentbelastung und/oder eine Zustandsüberwachung des Spannungswellengetriebes 40 durchzuführen. Die Auswerteeinheit 38 und die Überwachungseinheit 54 können dieselbe Einheit sein.

Der Zusatzsensor 52 und die Überwachungseinheit 54 können in äquivalenter Weise auch bei den in Fig. 2-4 dargestellten Spannungswellengetriebereinrichtungen 10 vorgesehen sein. Der Sensor 34 und die Maßverkörperung 30 können in anderen bevorzugten Ausführungsformen wie oben beschrieben auch mit anderen Messprinzipien wie beispielsweise induktiv oder kapazitiv ausgebildet sein.

### Bezugszeichenliste

- 1: Flexspline
- 2: Verzahnung des Flexspline
- 4: Circular Spline
- 5: Verzahnung des Circular Spline
- 7: Wave-Generator
- 8: kragenförmiger Bereich
- 10: Spannungswellengetriebeeinrichtung
- 16: räumlich feststehendes Bauteil
- 23: Wave-Generator-Lager
- 24: Topfboden
- 25: Dynamic Spline
- 26: Rotor
- 27: Lager
- 28: Plug
- 30a-o: Maßverkörperung
- 34: Sensor
- 38: elektronische Auswerteeinheit
- 40: Spannungswellengetriebe
- 52: Zusatzsensor
- 54: Überwachungsvorrichtung

## Patentansprüche

1. Spannungswellengetriebeeinrichtung (10), umfassend ein Spannungswellengetriebe (40) mit einem eine erste Verzahnung (5) aufweisenden Zahnrad (4) (Circular Spline), einem eine zweite Verzahnung (2) aufweisenden flexiblen Zahnrad (1) (Flexspline) und einem Wellengenerator (7) (Wave-Generator) mit einem Wave-Generator-Lager (23) zum Auslenken des Flexsplines (1) in radialer Richtung, wobei die zweite Verzahnung (2) des Flexsplines (1) mit der ersten Verzahnung (5) des Circular Splines (4) in Eingriff bringbar ist, und mit einem gegenüber dem Flexspline (1) und/oder dem Circular Spline (4) räumlich feststehenden Bauteil (16),
**dadurch gekennzeichnet, dass**
eine Maßverkörperung (30a-o) an einem der Zahnräder (1, 4) oder dem Wellengenerator (7) angeordnet ist und am räumlich feststehenden Bauteil (16) wenigstens ein Sensor (34) vorgesehen ist, welcher dazu ausgebildet ist, die Maßverkörperung (30a-o) kontaktlos zu erfassen.

2. Spannungswellengetriebeeinrichtung (10) nach Anspruch 1, wobei die Maßverkörperung (30a, 30 b) umfangsseitig am Flexspline (1) oder an einem Topfboden (24) des Flexsplines (1) angebracht ist.

3. Spannungswellengetriebeeinrichtung (10) nach Anspruch 2, wobei der Flexspline (1) topfförmig mit einem Topfboden (24) und einer daran anschließenden Wandung ausgebildet ist, und wobei die Maßverkörperung (30a) umfangsseitig benachbart zum Topfboden angebracht ist.

4. Spannungswellengetriebeeinrichtung (10) nach einem der Ansprüche 1 bis 3, wobei die Maßverkörperung (30a-o) als Master-Nonius-Maßverkörperung ausgebildet ist.

5. Spannungswellengetriebeeinrichtung (10) nach einem der Ansprüche 1 bis 3, wobei die Kodierung inkrementell ausgeführt ist.

6. Spannungswellengetriebeeinrichtung (10) nach einem der Ansprüche 1 bis 5, wobei die Maßverkörperung (30a-o) eine magnetische Kodierung aufweist.

7. Spannungswellengetriebeeinrichtung (10) nach einem der Ansprüche 1 bis 5, wobei die Erfassung induktiv, kapazitiv oder optisch erfolgt.

8. Spannungswellengetriebeeinrichtung (10) nach einem der Ansprüche 1 bis 7, wobei die Maßverkörperung (30a-o) einen elastischen Maßverkörperungskörper umfasst.

9. Spannungswellengetriebeeinrichtung (10) nach Anspruch 8, wobei der Maßverkörperungskörper und der Flexspline (1) einstückig ausgebildet sind.

10. Spannungswellengetriebeeinrichtung (10) nach einem der Ansprüche 1 bis 9, wobei zwei Sensoren (34) vorgesehen sind, welche in einer Ebene senkrecht zu einer Drehachse Getriebes (40) in einem Winkel von 90° zueinander angeordnet sind.

11. Spannungswellengetriebeeinrichtung (10) nach einem der Ansprüche 1 bis 9, wobei zwei Sensoren (34) vorgesehen sind, welche in einer Ebene senkrecht zu einer Drehachse des Getriebes (40) in einem Winkel von 180° zueinander angeordnet sind.

12. Spannungswellengetriebeeinrichtung (10) nach einem der Ansprüche 1 bis 9, wobei zwei Sensoren (34) vorgesehen sind, welche in einer Ebene senkrecht zu einer Drehachse des Getriebes (40) in einem Winkel von 60° zueinander angeordnet sind.

13. Spannungswellengetriebeeinrichtung (10) nach einem der Ansprüche 1 bis 12, mit einem Zusatzsensor (52) für die Drehposition des Wave-Generators (7), wobei eine Überwachungsvorrichtung (54) vorgesehen ist, welche eingangsseitig mit dem wenigstens einen Sensor (34) und dem Zusatzsensor (52) verbunden ist und die dazu konfiguriert ist, mittels vorgegebener Getriebeparameter eine indirekte Messung der Drehmomentbelastung und/oder eine Zustandsüberwachung des Spannungswellengetriebes (40) durchzuführen.

14. Spannungswellengetriebeeinrichtung (10) nach einem der Ansprüche 1 bis 13, wobei der Flexspline (1) radial innerhalb des Circular Splines (4) angeordnet ist, und wobei die erste Verzahnung (5) des Circular Splines (4) eine Innenverzahnung ist, und wobei die zweite Verzahnung (2) des Flexspline (1) eine Außenverzahnung ist.

15. Verfahren zur Drehpositionsbestimmung eines Spannungswellengetriebes (40), welches umfasst ein Spannungswellengetriebe (40) mit einem eine erste Verzahnung (5) aufweisenden Zahnrad (4) (Circular Spline), einem eine zweite Verzahnung (2) aufweisenden flexiblen Zahnrad (1) (Flexspline) und einem Wellengenerator (7) (Wave-Generator) mit einem Wave-Generator-Lager (23) zum Auslenken des Flexsplines (1) in radialer Richtung, wobei die zweite Verzahnung (2) des Flexsplines (1) mit der ersten Verzahnung (5) des Circular Splines (4) in Eingriff bringbar ist,
**dadurch gekennzeichnet, dass**
eine Maßverkörperung (30a-o), welche an einem der Zahnräder (1, 4) oder dem Wellengenerator (7) angeordnet ist, von wenigstens einem in Bezug auf das Zahnrad (1, 4) und/oder den Wellengenerator (7) raumfest angeordneten Sensor (34) erfasst wird.
